(19) Europäisches Patentamt / European Patent Office / Office européen des brevets

(11) EP 1 853 645 B1

(12) **EUROPEAN PATENT SPECIFICATION**

(45) Date of publication and mention of the grant of the patent:
**27.04.2011 Bulletin 2011/17**

(21) Application number: **06708298.2**

(22) Date of filing: **15.02.2006**

(51) Int Cl.:
***C08G 75/00*** *(2006.01)*

(86) International application number:
**PCT/EP2006/050974**

(87) International publication number:
**WO 2006/087352 (24.08.2006 Gazette 2006/34)**

(54) **POLY(ARYL ETHER SULFONE) MATERIAL AND USE THEREOF**

POLY(ARYLETHERSULFON)-MATERIAL UND VERWENDUNG DAVON

MATIERE DE POLY(ARYL ETHER SULFONE) ET SON UTILISATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.02.2005 US 653137 P**

(43) Date of publication of application:
**14.11.2007 Bulletin 2007/46**

(73) Proprietor: **Solvay Advanced Polymers, L.L.C.**
**Alpharetta, GA 30005-3914 (US)**

(72) Inventor: **WEINBERG, Shari**
**Atlanta, Fulton, Georgia 30324 (US)**

(74) Representative: **Jacques, Philippe et al**
**Solvay S.A.**
**Département de la Propriété Industrielle**
**Rue de Ransbeek, 310**
**1120 Bruxelles (BE)**

(56) References cited:

| | |
|---|---|
| **EP-A- 0 331 492** | **EP-A- 0 450 790** |
| **WO-A-86/04906** | **WO-A-91/15539** |
| **US-A- 4 997 902** | **US-A- 5 110 934** |
| **US-A- 5 164 466** | **US-A- 5 173 542** |
| **US-A- 5 916 958** | **US-A1- 2002 010 307** |
| **US-B1- 6 228 970** | **US-B1- 6 329 493** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 853 645 B1

## Description

REFERENCE TO RELATED APPLICATIONS

This application claims priority to U.S. provisional application 60/653,137 filed February 16, 2005, the whole content of which is incorporated herein by reference.

The present invention relates to a high-performance thin film, suitable notably for bagging various insulation materials included in some parts of aircrafts.

US 2002/010307 A1 describes an improved method for producing poly(biphenyl ether sulfone)s. The resulting poly(biphenyl ether sulfone)s have a high molecular weight and can form tough, off-white films (see abstract and [0010]).

US-B1-6 329 493 describes plumbing articles made from a polymer blend comprising a poly(biphenyl ether sulfone) and a poly(aryl ether sulfone) other than a poly(biphenyl ether sulfone), namely one comprising bisphenol A residues. The blend provides outstanding retention of tensile elongation after prolonged exposure to water (see abstract and col. 1,1. 7-15).

US-B1-6 228 970 describes a poly(biphenyl ether sulfone) having a low polydispersity and a low level of oligomer (see abstract). Due its excellent mechanical and other properties, it can be used to manufacture a variety of useful articles, notably films (see p.1, col. 39-41; col. 7,1. 21-23; col. 8,1. 16-18). The poly(biphenyl ether sulfone) of US-B1-6 228 970 can be blended with other polymeric materials, and fillers such as titanium dioxide and zinc borate (col. 8, 1. 22-36).

US-A-5 916 958 describes compositions comprising poly(biphenyl ether sulfone), fluorocarbon polymer and titanium dioxide, which exhibit enhanced flame retardant characteristics. They may further comprise poly(aryl ether ketone) or another poly(aryl ether sulfone) (see abstract). Numerous compositions containing polyphenylsulfone, polytetrafluoroethylene and titanium dioxide are exemplified. Other examples of compositions containing polyphenylsulfone and polytetrafluoroethylene, but free of titanium dioxide are provided in for comparative purposes. The polymer compositions of US-A-5 916 958 may be fabricated by melt processing to form a variety of shaped articles and molded good, notably films (of undefined thickness), tapes and sheets. The sheets may have a thickness less than about 0.125 inches (about 3200 $\mu$m) (see col. 7,1.1. 36-58).

US-A-5 110 934 describes certain bisaryl(imido)phenols of general formula :

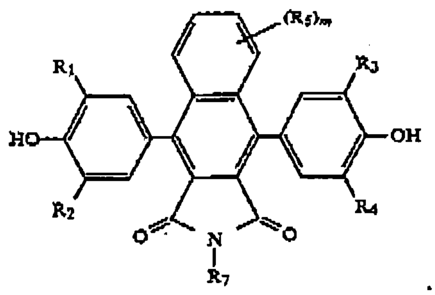

useful in producing poly(imido aryl ether ketone)s and poly(imido aryl ether sulfone)s which are amorphous and soluble in readily available solvents (see abstract). Several poly(imido aryl ether sulfone)s are exemplified. They are produced from a dihalodiphenylsufone and a bisaryl(imido)phenol complying with the above general formula, wherein $R_1$ through $(R_5)_m$ is nil, and $R_7$ is e.g. methyl (example 18) or phenyl (example 24). In general, the poly(imido aryl ether sulfone)s of US-A-5 110 934 can produce tough, flexible films which withstand two 180° folds (see last par. of col. 8). In particular, US-A-5 110 934 describes in table 2 films made of certain poly(imido aryl ether sulfone)s. The thickness of these films is not specifically mentioned.

WO 91/15539 A describes flame retardant polymer compositions comprising a poly(biphenyl ether sulfone) and anhydrous zinc borate. The preferred compositions of the invention are blends of a poly(biphenyl ether sulfone) with a poly(aryl ether ketone) containing zinc borate and a fluorocarbon polymer, and optionally titanium dioxide, and they exhibit improved heat release characteristics (see abstract). Numerous compositions containing polyphenylsulfone, PTFE and anhydrous zinc borate are exemplified. Other examples of compositions containing polyphenylsulfone and PTFE, but free of anhydrous zinc borate are provided in WO 91/15539 A for comparative purposes. The polymer compositions of WO 91/15539 A are easy to melt-fabricate and yield melded (emphasis added) articles having smooth and aesthetically pleasing characteristics. They are useful in a number of applications, in particular for the construction of various panels and parts for aircraft interiors (see p. 5,1. 29-37).

US-A-5 164 466 describes a poly(aryl ether sulfone) blend comprising from about 25 to about 99 wt. % of a

poly(biphenyl ether sulfone) and from about 1 to about 75 wt. % of a second poly(aryl ether sulfone) comprising bisphenol A moieties (see abstract). It may further include additives such as titanium dioxide (col. 6,1. 65-67). It is useful to manufacture a wide variety of medical devices, and can also be fabricated into any desired shape, notably films (see col. 6,1. 47-59).

EP-A-0 450 790 describes a poly(aryl ether sulfone) blend comprising from about 25 to about 99 wt. % of a poly(biphenyl ether sulfone) and from about 1 to about 75 wt. % of a second poly(aryl ether sulfone), especially polyethersulfone (see abstract and claim 1). It may further include additives such as titanium dioxide (p. 6, 1. 11). It is useful to manufacture a wide variety of medical devices, and can also be fabricated into any desired shape, *notably* films (see p. 6,1. 1-7).

US-A-5 173 542 describes a crosslinkable composition comprising a polymer and a bistriazene compound, and polymers crosslinked from the crosslinkable composition (see abstract). The polymers so crosslinked are particularly useful in a multilayered integrated circuit article, in the form of a coating (emphasis added) having a thickness of about 5 to about 40 μm, said coating being coated on a substrate (see col. 10,1. 13-15 and 26-30). The polymer may be a poly(aryl ether sulfone) (see abstract and col. 2,1. 21-25). The poly(aryl ether sulfone) may be a bisphenol A polysulfone or a polyethersulfone (see from col. 7,1. 53-62). Example 6 describes a crosslinked polyethersulfone having a 98 % gel content, prepared from polyethersulfone and 15 wt. % of a bistriazene of formula:

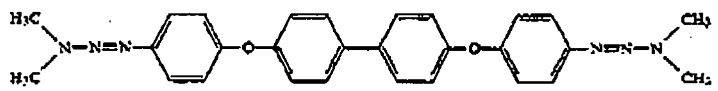

EP-A-0 331 492 describes the use of certain well-defined poly(aryl ether sulfone)s in medical devices where transparency and excellent environmental stress-crack resistance are required. The poly(aryl ether sulfone)s of types (b) and (c) of claim 1 are poly(biphenyl ether sulfone)s, as they contain at least about 6C mol. % of 4,4'-biphenylene.

US-A-4 997 902 describes a polyarylether which is stable at high temperatures. It contains from 60 to 97 mol. % of certain aryletherketone units, from 3 to 40 mol. % of certain arylethersulfoneketone units, and from 0 to 15 mol. % of still certain other aryletherketone units ; when n is 2 in the formula (II), the arylethersulfoneketone units of the includes a biphenylene group (see abstract). It can be blended with a "conventional" poly(aryl ether sulfone (see col. 5, 1. 6-12). The polyarylether of US-A-4 997 902 is particularly suitable for the production of fibers, films and moldings (see col. 8, 1. 21-26).

WO 86/04906 A describes certain tough poly(aryl ether sulfone)s polymerized from 4,4-bis(p-halobenzene sulfonyl)biphenyl monomer (see abstract). They are easily processable, are soluble in N-methylpyrrolidinone so that they can be cast into films with this solvent, and have a good combination of mechanical properties (p. 5, 2nd par.). They can include various additives, such as titanium dioxide (p. 12, 3rd par.). They may be fabricated into any desired shape, notably films (p. 12, 4th par.). Examples of poly(biphenyl ether sulfone)s are notably provided in tables I, II and III, respectively on p. 15, 18 and 20, wherein 4,4-bis(p-halobenzene sulfonyl)biphenyl is reacted with one or more diols chosen dihydroxydiphenylsulfone, biphenol and hydroquinone. "Film" strips of 4"long, 0.125" wide and 0.020" (20 mils, 508 μm) thick made of the poly(biphenyl ether sulfone)s of examples 8 to 14 and of controls D to F have been prepared for determining the pendulum impact strength (p. 16, 1st six phrases).

The industry, in particular the aircraft industry, uses profitably various materials, like glass fiber, to make insulative batting of various industrial parts against heat, sound and/or moisture. Because of their physical form (e.g. fibrous or particulate) and also to protect them from moisture, these insulating materials need usually to be wrapped. |A polymer film is preferably used to form the bag. The polymer film needs usually to be thin, because the polymer, even if intrinsically exhibiting a fairly high fire and flame retardance, behaves usually somewhat poorer in a fire than the content of the bag itself (e.g. glass fiber), and because the industry, in particular the aircraft industry, is requiring parts made from more and more fire resistant materials.

Since the thin bagging film is exposed or susceptible to be exposed in severe environments, it should desirably meet a wide combination of various mechanical, thermal and/or chemical properties, despite of its low thickness.

Currently, thin bagging films made from metallized PET (available notably as MYLAR® products) are often used by the manufacturers of aircraft parts. However, in general, thin bagging films made from metallized PET are no more satisfactory for the encompassed end use, in particular because they do often not exhibit sufficient flame retardance, in compliance of the new requirements. These ones were settled notably with the aim at increasing the time for a post-crash external fuel fire to penetrate the fuselage to the interior as well as to eliminate the propagation of flight fires that begin between the interior walls and the external fuselage of an aircraft.

Other polymers have then been attempted for making thin bagging films in replacement of metallized PET, in particular PVF (commercially available notably as TEDLAR® polymers). However, thin bagging films made from PVF

are generally disliked by aircraft manufacturers, in particular because they emit fairly high toxic fumes when burning. Further, there are limitations on how PVF films can be manufactured, such that their thickness must be not less than at least 50 μm.

Thin bagging films made polyimides, such as KAPTON® resins, have also been made and have proved to be unsuitable in most cases, in particular because of insufficient toughness and insufficient toughness resistance after repeated exposure to moisture condensate.

Thus, there is currently a strong need in the industry, in particular in the aircraft industry, for a thin film, suitable notably for bagging various insulation materials included in some parts of aircrafts, which meets several, and preferably all, out of the following requirements :

- easiness of manufacturing, including high processibility of the material from which the film is made,
- high toughness, including after exposure to moisture condensate,
- high tear resistance, including after fatigue cycles,
- high fire resistance, in particular high flame retardance,
- low toxicity during burning,
- passing rating for the radiant panel flame propagation test,
- moderate cost, and
- regular surface aspect (in particular, the surface must be essentially free, if not totally free, of bumps),

in substantial progress with the prior art thin films.

Especially when the film to be made needs to be very thin, the quality of its surface aspect may be one of the most critical properties, if not sometimes the most critical one.

In certain applications, the thin film should further offer high chemical resistance to chemical agents, notably to strong acids, strong bases, aliphatic hydrocarbons and aromatic hydrocarbons, and have high hydrolytic stability.

The challenge of meeting several, if not all, the above requirements appeared to be especially tricky for the Applicant, since attempts to improve some of the above properties, resulted generally in a degradation of some other ones.

Yet, an excellent balance of properties is achieved, and even all the above requirements are often met, and possibly still other additional ones, by a film according to claim 1.

The thickness (t) of the film is advantageously defined as :

$$t = \int^V \tau(x,y,z)\, dx\, dy\, dz / V,$$

wherein x, y and z are the coordinates in a three-dimensional space of an elementary volume dV (dV being equal to dx times dy times dz) of the film of overall plain volume V, and τ is the local thickness.

The local thickness τ, associated to a material point of coordinates (x,y,z), is defined as the length of the shortest straight line D including the material point of concern, which goes right through the film (i.e. which goes from the material point where D enters the film to the material point where D exits the shaped particle).

It will be understood that the film according to the instant invention is not coated on a substrate. Thin layers of material which are coated on a substrate, commonly referred to as coatings, differ from the invented films. Coatings are usually produced by solution processing ; in contrast, and as will be detailed hereafter, the invented film are usually prepared by melt processing.

The thickness of the film is preferably less than 50 μm, more preferably less than 30 μm and still more preferably less than 20 μm.

Besides, the thickness of the film is advantageously greater than I μm, preferably greater than 2 μm, more preferably greater than 3 μm and still more preferably greater than or equal to 4 μm.

A most preferred thickness range is from 4 to 8 μm.

Another most preferred thickness range is above 8 and up to 16 μm.

Optionally, the film may contain locally some zones, e.g. at its extremities or along its perimeter, which are composed at least one material other than polymer composition (C), e.g. in a metal or in a thermoplastic material free of poly(biphenyl ether sulfone) and/or of fluorocarbon polymer.

Polymer composition (C) is contained in the film in an amount of advantageously more than 50 wt. %, based on the total weight of the film. Preferably, the film consists essentially of polymer composition (C). Still more preferably, the film consists of polymer composition (C).

The poly(aryl ether sulfone) material.

As previously mentioned, polymer composition (C) contains a poly(aryl ether sulfone) material (P).

For the purpose of the invention, a poly(aryl ether sulfone) material is intended to denote one or more polycondensation polymer(s) of which more than 50 mol. % of the recurring units contain at least one ether group (-O-), at least one sulfone group ($-SO_2-$) and at least one arylene group.

Poly(aryl ether sulfone) material (P) is contained in polymer composition (C) in an amount of advantageously more than 50 wt. %, preferably more than 70 wt. %, and more preferably more than 85 wt. %, based on the total weight of polymer composition (C).

As previously mentioned, poly(aryl ether sulfone) material (P) contains at least one poly(biphenyl ether sulfone) (P1).

For the purpose of the invention, a poly(biphenyl ether sulfone) is intended to denote a polycondensation polymer of which more than 50 mol. % of the recurring units are recurring unit (R1), containing at least one ether group (-O-), at least one sulfone group ($-SO_2-$) and at least one p-biphenylene groupe :

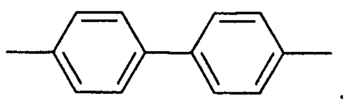

Recurring units (R1) are more preferably :

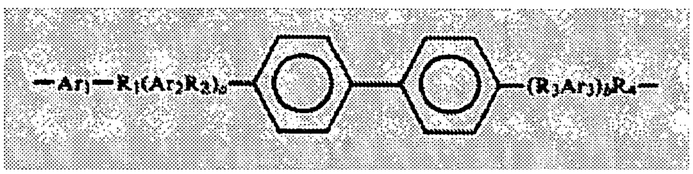

wherein $R_1$ through $R_4$ are -O-, $-SO_2-$, -S-, -CO-, with the proviso that at least one of $R_1$ through $R_4$ is $-SO_2-$ and at least one of $R_1$ through $R_4$ is -O- ; $Ar_1$, $Ar_2$ and $Ar_3$ are arylene groups containing 6 to 24 carbon atoms, and are preferably phenylene or p-biphenylene; and a and b are either 0 or 1.

For certain invented films, it is still more preferred that recurring units (R1) are :

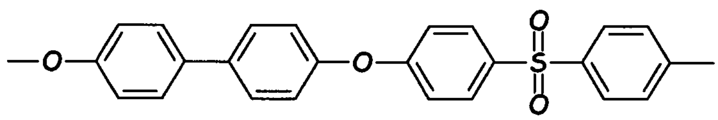

For certain other invented films, it is still more preferred that recurring units (R1) are :

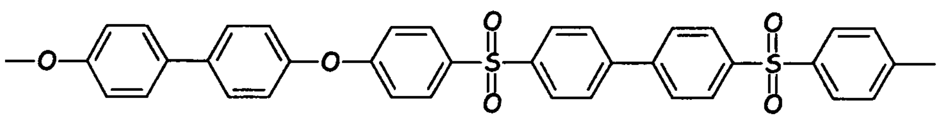

Optionally, poly(biphenyl ether sulfone) (P1) further comprises recurring units (R2) [different from recurring units (R1)].

Recurring units (R2) are preferably chosen from:

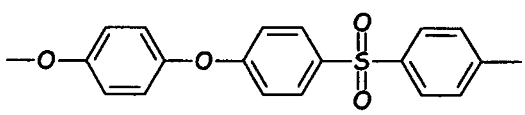

,

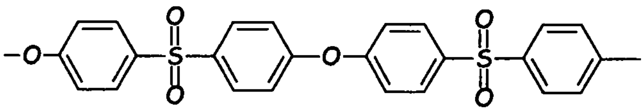

,

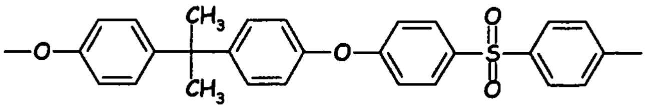

,

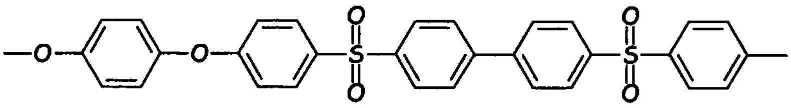

,

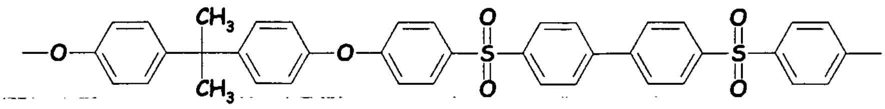

and

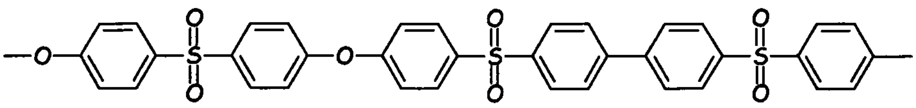

Poly(biphenyl ether sulfone) (P1) may notably be a homopolymer, a random, alternating or block copolymer.

Preferably at least 70 wt. %, more preferably at least 85 wt. % of the recurring units of the poly(biphenyl ether sulfone) (P1) are recurring units (R1). Still more preferably, poly(biphenyl ether sulfone) (P1) is a homopolymer of recurring units (R1).

For certain invented films, excellent results were obtained with homopolymers the recurring units of which are :

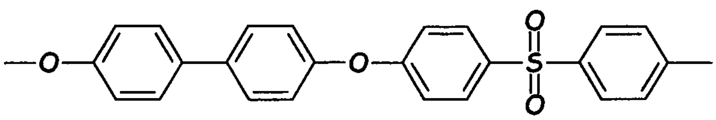

RADEL® R polyphenylsulfone from Solvay Advanced Polymers, L.L.C. is an example of the above homopolymer.

For certain other invented films, excellent results are obtained with homopolymers the recurring units of which are :

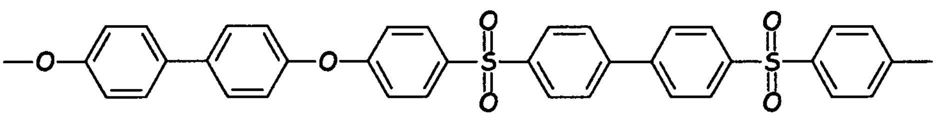

.

As previously mentioned, poly(aryl ether sulfone) material (P) may contain, in addition to poly(biphenyl ether

sulfone) (P1), at least one poly(aryl ether sulfone) (P2) different from poly(biphenyl ether sulfone) (P1).

Poly(aryl ether sulfone) (P2) can be advantageously chosen from polysulfones, polyethersulfones and polyetherethersulfones.

Polyetherethersulfones, as herein defined, are polycondensation polymers of which more than 50 mol. % of the recurring units are :

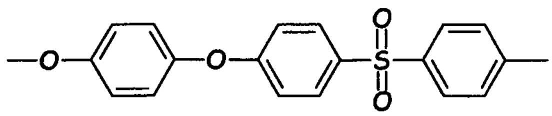

Polyethersulfones, as herein defined, are polycondensation polymers of which more than 50 mol. % of the recurring units are :

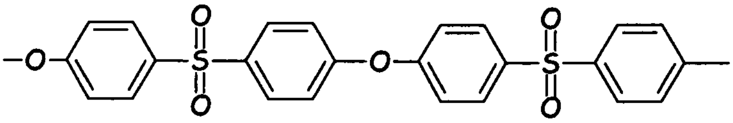

;

said polyethersulfones may optionally further comprise less than 50 mol. % of recurring units

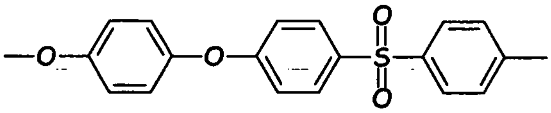

.

Polyethersulfones are available as RADEL® A from Solvay Advanced Polymers, L.L.C.

Polysulfones, as herein defined, are polycondensation polymers of which more than 50 mol. % of the recurring units are :

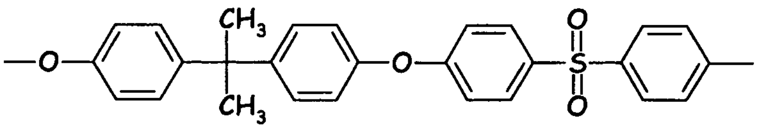

Polysulfones are available as UDEL® PSF from Solvay Advanced Polymers, L.L.C.

Poly(aryl ether sulfone) (P2) is preferably chosen from polyethersulfones and polyetherethersulfones, and more preferably from polyethersulfones.

For certain preferred invented films, the weight of poly(aryl ether sulfone) (P2), based on the total weight ofpoly (aryl ether sulfone) material (P), ranges from 25 to 75 %, and more preferably from 40 to 60%.

For certain other preferred invented films, poly(aryl ether sulfone) material (P) is free ofpoly(aryl ether sulfone) (P2). Thus, in said films, poly(aryl ether sulfone) material (P) is composed of poly(biphenyl ether sulfone) (P1).

Polymers (P1) and (P2) are advantageously amorphous.

<u>The fluorocarbon polymer.</u>

For the purpose of the present invention, a fluorocarbon polymer is intended to denote any polymer of which more than 50 mol. % of the recurring units are derived from at least one ethylenically unsaturated monomer comprising at least one fluorine atom (hereafter, "the fluorinated monomer").

Preferably more than 90 mol. % of the recurring units of the fluorocarbon polymer are derived from the fluorinated monomer.

Still more preferably, all the recurring units of the fluorocarbon polymer are derived from the fluorinated monomer.

The fluorinated monomer may be chosen from perfluorinated monomers such as octafluorobutenes, hexafluoropropylene, tetrafluoroethylene and perfluoralkylvinylethers (e.g. perfluoromethylvinylether and perfluoroproylvinylether), and non perfluorinated monomers such as trifluoroethylene, chlorotrifluoroethylene and vinylidene fluoride.

The fluorinated monomer is preferably tetrafluoroethylene or a mixture of tetrafluoroethylene with at least one perfluorinated monomer (other than tetrafluoroethylene).

The fluorinated monomer is more preferably tetrafluoroethylene.

Good results were obtained when the fluorocarbon polymer was a homopolymer of tetrafluoroethylene ("PTFE").

Excellent results were obtained when the fluorocarbon polymer was a non fibrillating PTFE (also referred to as "low molecular weight PTFE" or "low melt viscosity PTFE").

The non fibrillating PTFE has an average molecular weight in number of preferably below 700,000 (as determined by conventional GPC technique).

Besides, the non fibrillating PTFE has preferably an average molecular weight in number of preferably above 50,000 (as determined by conventional GPC technique).

The non fibrillating PTFE has preferably a melt viscosity of below $10^4$ Pa.s, as measured at 372°C in accordance with the procedure ASTM D1239-52T, modified as disclosed in U.S. Pat. No. 4,380,618.

The non fibrillating PTFE is preferably obtained by irradiation degradation of a high molecular weight homopolymer of tetrafluoroethylene (typically, with an average molecular weight in number above 2,000,000), or directly by polymerization technique such as disclosed in example 1 of US Pat. No. 5,223,343.

The non fibrillating PTFE is usually in the form of finely divided solids, and is then commonly referred to as "PTFE micropowder". The finely divided solids have an average particle size of preferably less than 100 μm, more preferably less than 20 μm, still more preferably less than 10 μm and the most preferably less than 5 μm.

The non fibrillating PTFE has preferably the thermal stability, chemical inertness, lubricity, and high melting temperature similar to high molecular weight PTFEs.

An especially suitable non fibrillating PTFE is POLYMIST® F5A PTFE, commercially available from Solvay Solexis, Inc. Other suitable non fibrillating PTFEs are commercially available notably from DuPont as ZONYL® PTFE (e.g. ZONYL® MP1600 grade), and from Daikin Industries, Ltd. as LUBLON® (e.g. LUBLON® L-5 PTFE).

The weight of the fluorocarbon polymer, based on the weight of poly(aryl ether sulfone) material (P), is advantageously at least 1.0 %, preferably above 2.5 %, and still more preferably above 4.0 %.

Besides, the weight of the fluorocarbon polymer, based on the weight of poly(aryl ether sulfone) material (P), is advantageously at most 30 %, preferably below 18 %, and still more preferably below 12 %.

<u>Optional ingredients.</u>

<u>(1) Anhydrous zinc borate and other inorganic flame retardants.</u>

Polymer composition (C) may optionally further comprise anhydrous zinc borate. The anhydrous zinc borate over fluorocarbon polymer weight ratio ($q_1$) is advantageously such that :

$$0 \le q1 \le 50\%.$$

As described in US Pat. No. 5,204,400, anhydrous zinc borate (i.e. zinc borate with less than 0.2 wt. % of water, and preferably with no measurable water content like XPI-187 zinc borate from U.S. Borax) is a suitable flame retardant agent of poly(biphenyl ether sulfone) compositions, and it is further known that it can be used profitably in combination with a fluorocarbon polymer.

The Applicant has surprisingly found that thin films made poly(biphenyl ether sulfone) compositions which are free of anhydrous zinc borate or, if not, which contain anhydrous zinc borate at a reduced level when compared to the level of the fluorocarbon polymer (i.e. with the ratio $q_1$ within the above specified range), exhibit a further improved balance of properties. In particular, the Applicant noted a further improvement as concerns the surface aspect of the thin film : while flame retarded poly(biphenyl ether sulfone) compositions with (even quite) anhydrous zinc borate in a ratio $q_1$ > 50% may sometimes provide thin films with a substantial number of undesirable bumps (said bumps differing completely in nature and origin from the splays and cracks which are known to be possibly caused by hydration water of zinc borate), the thin films made from the same compositions except the ratio $q_1$ is now within the range $0 \le q_1 \le 50\%$, were essentially free, or even totally free, of bumps. The thinner the film is, the higher the improvement was.

Weight ratio $q_1$ is preferably below 30%, and more preferably below 10%. Still more preferably, $q_1$ is equal to 0 ; otherwise said, polymer composition (C) is then free of anhydrous zinc borate.

The weight of anhydrous zinc borate, based on the weight of poly(aryl ether sulfone) material (P), is advantageously below 4.0 %, preferably below 2.0 %, and more preferably below 1.0 %. Still more preferably, polymer composition (C) is free of anhydrous zinc borate, as previously described.

More generally, should polymer composition (C) contain inorganic flame retardants, their weight should advantageously be low when compared to the weight of the fluorocarbon polymer. Accordingly, it is advantageous that the inorganic flame retardant over fluorocarbon polymer weight ratio ($q'_1$) is such that :

$$0 \leq q'_1 \leq 60\%.$$

Weight ratio $q'_1$ is preferably below 30% and more preferably below 10%.

The weight of inorganic flame retardant, based on the weight of poly(aryl ether sulfone) material (P), is advantageously below 6.0 %, preferably below 3.0 %, and more preferably below 1 %.

<u>(2) Titanium dioxide.</u>

Optinally, polymer composition (C) may further comprise titanium dioxide.

As described in notably in US Pat. No. 5,204,400 and US Pat. 5,916,058, titanium dioxide can be used as a pigment of poly(biphenyl ether sulfone) compositions, and it is further known that it can be profitably combined with a fluorocarbon polymer, to provide efficiently pigmented and flame-retarded compositions.

Despite of its possible beneficial effect on flame-retardancy (in combination with a fluoropolymer), titanium dioxide is usually not qualified per se as an inorganic flame-retardant, and, for the purpose of the present invention, it is not an inorganic flame-retardant.

The titanium dioxide used in polymer composition (C) is commercially available.

The particle size of the titanium dioxide is advantageously below 5.0 μm, because higher particle sizes can notably affect the physical properties of polymer composition (C).

Any of the available crystalline forms of the titanium dioxide may be used, with the rutile form preferred due to its superior pigment properties.

The Applicant has found that, among the invented films, a further improvement is still achieved by optimizing the titanium dioxide over fluorocarbon polymer ratio ($q_2$).

In particular, the Applicant noted a possible further improvement as concerns the surface aspect (e.g. bump level) and/or the tear resistance of the invented film.

Thus, the titanium dioxide over fluorocarbon polymer weight ratio ($q_2$) is advantageously such that :

$$0 \leq q_2 \leq 150\%.$$

In certain preferred invented films, weight ratio ($q_2$) is between 50 and 125% ; more preferably, it is between 50 and 100%.

In certain other preferred invented films, weight ratio ($q_2$) is up to 50% ; more preferably, polymer composition (C) is free of titanium dioxide.

For similar reasons, the weight of titanium dioxide, based on the weight of poly(aryl ether sulfone) material (P), is advantageously below 8.0 %.

In certain preferred invented films, the weight of titanium dioxide, based on the weight of poly(aryl ether sulfone) material (P), is preferably between 2.0 and 6.0 % ; more preferably, it is between 3.0 and 5.0%.

In certain other preferred invented films, the weight of titanium dioxide, based on the weight of poly (aryl ether sulfone) material (P), is up to 5.0% ; more preferably, polymer composition (C) is free of titanium dioxide.

(3) <u>Inorganic heat stabilizers</u>

Polymer composition (C) further comprises advantageously at least one inorganic stabilizer.

The inorganic stabilizer is preferably a metal oxide ; more preferably, it is zinc oxide.

The inorganic stabilizer over fluorocarbon polymer weight ratio ($q_3$) is advantageously such that :

$$0 \leq q_3 \leq 50\ \%.$$

Weight ratio ($q_3$) is preferably between 1 and 20 % ; more preferably, it is between 2 and 10 %.

The weight of heat stabilizer, based on the weight of poly(aryl ether sulfone) material (P), is preferably between 0.1 and 2.0 % ; more preferably, it is between 0.2 and 1.0%.

(4) Other ingredients

Polymer composition (C) may further comprise other conventional ingredients of sulfone polymer compositions. These ones are usually chosen from:

- inorganic compounds (IC) other than those previously cited,
- organic non polymeric compounds (OC) such as organic antioxidants, and
- organic polymers (P3) other than (P1) and (P2), e.g. melt-processible polyimides and poly(aryl ether ketone)s.

The inorganic compounds (IC) over fluorocarbon polymer weight ratio ($q_4$) is advantageously such that:

$$0 \leq q_4 \leq 50\ \%.$$

The weight of inorganic compounds (IC), based on the weight of poly(aryl ether sulfone) material (P), is advantageously below 2.0 %.

Preferably, polymer composition (C) is free of inorganic compounds (IC).

The overall weight of (IC), (OC) and (P3) ingredients is advantageously below 25 wt. %, based on the weight of poly(aryl ether sulfone) material (P) ; it is preferably below 5 wt. % ; more preferably, polymer composition (C) is free of ingredients (IC), (OC) and (P3).

The polymer composition is advantageously prepared by any conventional mixing method. A preferred method comprises dry mixing the ingredients of polymer composition (C) in powder or granular, using e.g. a mechanical blender, then extruding the mixture into strands and chopping the strands into pellets.

Suitable techniques to make the film according to the present invention are well known from the skilled person. For example, the invented film can in principle be made by solvent casting [this process comprises dissolving polymer composition (C) in a solvent to obtain a solution, laying the so-obtained solution on a labile substrate to form a film and removing the so-formed film from the labile substrate]. However, the invented film is usually made by melt processing, and preferably by extrusion processing.

In the extrusion process, polymer composition (C) is advantageously dried before being extruded. The drying may take place in a dehumidifying oven. The drying temperature ranges advantageously from 135°C to 165°C, and is typically of about 150°C. The drying time ranges advantageously from 6 to 24 hours, depending notably on the drying temperature, and is typically of about 12 hours. Among many other suitable extruders and dies, a 25 mm Optical Control Systems Model 20/26 Extruder performs well. As well known from the skilled person, the temperature of the heat zones of the extruder are usually adapted as a function of a.o. the chemical nature of the polymer composition to be extruded, here polymer composition (C). For example, for a polymer composition in which the poly(aryl ether sulfone) material is composed of a RADEL® R poly(biphenyl ether sulfone) neat polymer, the heat zones of the extruder are preferably at least 360°C, and more preferably at least 370°C ; besides, they are preferably at most 390°C, and more preferably at most 380°C. All the heat zones of the extruder may be set at the same temperature. As it is also well know from the skilled in the art, the screw rate of the extruder is usually adapted as a function of a.o. the thickness of the film. Generally, the thinner the film is, the lower the screw rate is. The film is advantageously cast onto two or more sequential chill rolls, said chill rolls being maintained at a temperature, which ranges preferably from 220 to 240°C when the poly(aryl ether sulfone) material is composed of a RADEL® R poly(biphenyl ether sulfone) neat polymer.

The present invention concerns thus also a process for making the invented film, which comprises melt processing polymer composition (C). Preferably, the invented process comprises the step of extruding polymer composition (C).

The present invention further concerns a shaped article comprising the film as above described or prepared by the process as above described.

The invented shaped article comprises advantageously, and preferably consists of,

- a bagging part consisting of the film, and
- a material (Z), said material (Z) being wrapped by the bagging part.

The bagging part is advantageously closed, possibly through sealing.

The material is advantageously in divided form, such as in particulate or in fibrous form. It is preferably a fiber. Very preferably, it is glass fiber.

A polymer composition, which is especially suitable for making the invented film, is one containing :

- a poly(aryl ether sulfone) material (P), composed of
  - ■ at least one poly(biphenyl ether sulfone) (P1), or
  - ■ at least one poly(biphenyl ether sulfone) (P1) and at least one poly(aryl ether sulfone) (P2) different from poly (biphenyl ether sulfone) (P1), and
- at least one fluorocarbon polymer, and
- optionally, anhydrous zinc borate and/or titanium dioxide,

wherein :

- the anhydrous zinc borate over fluorocarbon polymer weight ratio ($q_1$) is such that :

$$0 \leq q_1 \leq 50\%,$$

- the titanium dioxide over fluorocarbon polymer weight ratio ($q_2$) is such that :

$$0 \leq q_2 \leq 150\%,$$

  and
- poly(aryl ether sulfone) material (P) is contained in the polymer composition in an amount of more than 70 wt. %, based on the total weight of the polymer composition.

Except the above mentioned peculiarities, the polymer composition meets all the preferred features of polymer composition (C), whatever the level of preference expressed.

The polymer composition was advantageously used for making films, more particular thin films, but, more generally, it proved also useful for making various articles, preferably filaments, sheets and hollow bodies.

The invention will be better understood by consideration of the following examples which are provided by way of illustration and not in limitation thereof.

Examples (according to the invention)

Preparation of polymer compositions.

Polymer compositions (a), (b) and (c) were prepared in the form of pellets.

Said polymer compositions consist respectively of:

| Ingredient | Polymer composition (a) | Polymer composition (b) | Polymer composition (c) |
|---|---|---|---|
| RADEL® R 5200 poly(biphenyl ether sulfone) [neat polymer] | 94.85 | 91.10 | 86.30 |
| Polymist® F5A non fibrillating PTFE | 2.95 | 4.80 | 9.60 |
| Rutile titanium dioxide | 1.95 | 3.85 | 3.85 |
| Zinc oxide | 0.25 | 0.25 | 0.25 |

The so-obtained pellets were then extruded so as to obtain films having a thickness of 12 μm, as described hereafter.

Extrusion of the polymer compositions into films having a thickness of about 12 μm.

The pellets were dried in a dehumidifying oven at 150°C overnight for approximately 12 hours. The pellets were

extruded into films using a 25 mm Optical Control Systems Model 20/26 Extruder with a 10.16 cm wide die. The heat zones were all set at 375°C to achieve a melt of approximately 375°C, and the extruder screw was rotated at 3 rpm. Film was cast onto two sequential chill rolls the first maintained at 225°C and the other at 220°C. Film was taken up at approximately 2.0 m/min and was about 8.32 cm wide and 12 μm thick.

Evaluation of the 12 μm-films.

The films exhibited a superior balance of properties, in substantial progress from the prior art films. Notably, among other properties at a high level, the films had high toughness, including after exposure to moisture condensate, high tear resistance, high flame retardancy and a regular surface aspect ; in particular, they were free of bumps, in contrast with some prior art films made from some commercial Radel® R poly(biphenyl ether sulfone) fire-resistant grades.

Extrusion of the polymer compositions into films having a thickness of about 6 μm.

Films having a thickness of 6 μm are produced by extruding the pellets of polymer compositions (a), (b) and (c).

## Claims

1. Film having a thickness of below 100 μm, containing a polymer composition (C) containing :

   - a poly(aryl ether sulfone) material (P), composed of

     ■ at least one poly(biphenyl ether sulfone) (P1) of which more than 50 mol. % of the recurring units are recurring units (R1) containing at least one ether group (-O-), at least one sulfone group ($-SO_2-$) and at least one p-biphenylene group :

     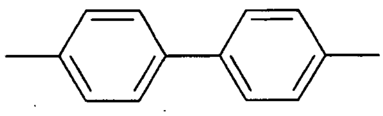,

     or

     ■ at least one poly(biphenyl ether sulfone) (P1) and at least one poly(aryl ether sulfone) (P2) different from poly(biphenyl ether sulfone) (P1), and

   - at least one fluorocarbon polymer.

2. Film according to claim 1, **characterized in that** the thickness is less than 20 μm.

3. Film according to either claim 1 or 2, **characterized in that** the thickness is greater than 2 μm.

4. Film according to either claim 2 or 3, **characterized in that** the thickness is from 4 to 8 μm.

5. Film according to either claim 2 or 3, **characterized in that** the thickness is above 8 and up to 16 μm.

6. Film according to anyone of the preceding claims, **characterized in that** it consists of polymer composition (C) and poly(aryl ether sulfone) material (P) is contained in polymer composition (C) in an amount of more than 85 wt. %.

7. Film according to anyone of the preceding claims, **characterized in that** recurring units (R1) are :

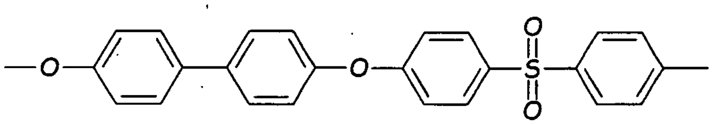

8. Film according to anyone of the preceding claims, **characterized in that** recurring units (R1) are :

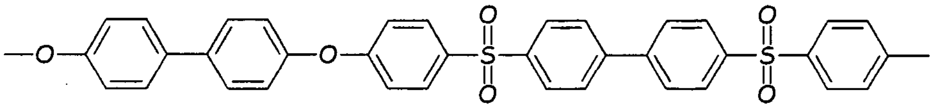

9. Film according to anyone of the preceding claims, **characterized in that** poly(biphenyl ether sulfone) (P1) is a homopolymer of recurring units (R1).

10. Film according to anyone of the preceding claims, **characterized in that** poly(aryl ether sulfone) (P2) is chosen from polysulfones, polyethersulfones and polyetherethersulfones.

11. Film according to anyone of the preceding claims, **characterized in that** the weight of poly(aryl ether sulfone) (P2), based on the total weight of poly(aryl ether sulfone) material (P), ranges from 40 to 60%.

12. Film according to anyone of the preceding claims, **characterized in that** poly(aryl ether sulfone) material (P) is composed of poly(biphenyl ether sulfone) (P1).

13. Film according to anyone of the preceding claims, **characterized in that** all the recurring units of the fluorocarbon polymer are derived from at least one fluorinated monomer.

14. Film according to claim 13, **characterized in that** the fluorinated monomer is tetrafluoroethylene or a mixture of tetrafluoroethylene with at least one perfluorinated monomer.

15. Film according to claim 14, **characterized in that** the fluorocarbon polymer is a homopolymer of tetrafluoroethylene.

16. Film according to claim 15, **characterized in that** the fluorocarbon polymer is a non fibrillating homopolymer of tetrafluoroethylene.

17. Film according to anyone of the preceding claims, **characterized in that** the weight of the fluorocarbon polymer, based on the weight of poly(aryl ether sulfone) material (P), is at least 1.0%.

18. Film according to anyone of the preceding claims, **characterized in that** the weight of the fluorocarbon polymer, based on the weight of poly(aryl ether sulfone) material (P), is below 18 %.

19. Film according to anyone of the preceding claims, **characterized in that** polymer composition (C) optionally further comprises anhydrous zinc borate and the anhydrous zinc borate over fluorocarbon polymer weight ratio ($q_1$) is such that :

$$0 \leq q_1 \leq 50\%.$$

20. Film according to claim 19, **characterized in that** polymer composition (C) is free of anhydrous zinc borate.

21. Film according to anyone of the preceding claims, **characterized in that** polymer composition (C) optionally further comprises titanium dioxide and the titanium dioxide over fluorocarbon polymer weight ratio ($q_2$) is such that :

$$0 \leq q_2 \leq 150\%.$$

22. Film according to claim 21, **characterized in that** the titanium dioxide over fluorocarbon polymer weight ratio ($q_2$) is such that :

$$50 < q_2 < 100\%.$$

**23.** Film according to claim 21, which is free of titanium dioxide.

**24.** Process for making the film according to anyone of the preceding claims, which comprises the step of extruding polymer composition (C).

**25.** Shaped article comprising the film according to anyone of claims 1 to 23 or prepared by the process according to claim 24.

**26.** Shaped article according to claim 25, which comprises

- a bagging part consisting of the film, and
- a material (Z), said material (Z) being wrapped by the bagging part.

**27.** Shaped article according to claim 26, **characterized in that** material (Z) is glass fiber.

**Patentansprüche**

**1.** Folie mit einer Dicke von weniger als 100 μm, enthaltend eine Polymerzusammensetzung (C), enthaltend :

- ein Poly(arylethersulfon)-Material (P), bestehend aus

■ mindestens einem Poly(biphenylethersulfon) (P1), wobei es sich bei mehr als 50 Mol- % der Wiederholungseinheiten um Wiederholungseinheiten (R1) mit mindestens einer Ethergruppe (-O-), mindestens einer Sulfongruppe ($-SO_2-$) und mindestens einer p-Biphenylengruppe :

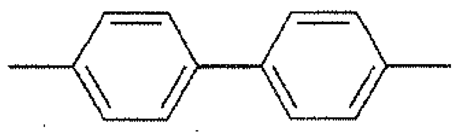

handelt,
oder
■ mindestens einem Poly(biphenylethersulfon) (P1) und mindestens einem Poly(arylethersulfon) (P2), das von dem Poly(biphenylethersulfon) (P1) verschieden ist, und

- mindestens ein Fluorkohlenstoffpolymer.

**2.** Folie nach Anspruch 1, **dadurch gekennzeichnet, daß** die Dicke weniger als 20 μm beträgt.

**3.** Folie nach Anspruch 1 oder 2, **dadurch gekennzeichnet, daß** die Dicke mehr als 2 μm beträgt.

**4.** Folie nach Anspruch 2 oder 3, **dadurch gekennzeichnet, daß** die Dicke 4 bis 8 μm beträgt.

**5.** Folie nach Anspruch 2 oder 3, **dadurch gekennzeichnet, daß** die Dicke über 8 und bis zu 16 μm beträgt.

**6.** Folie nach einem der vorhergehenden Ansprüche, **dadurch gekennzeichnet, daß** sie aus Polymerzusammensetzung (C) besteht und das Poly(arylethersulfon)-Material (P) in der Polymerzusammensetzung (C) in einer Menge von mehr als 85 Gew.- % enthalten ist.

**7.** Folie nach einem der vorhergehenden Ansprüche, **dadurch gekennzeichnet, daß** es sich bei den Wiederholungseinheiten (R1) um

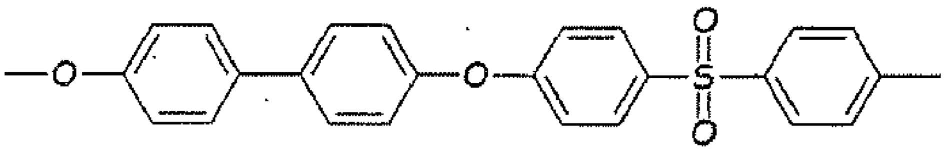

handelt.

8. Folie nach einem der vorhergehenden Ansprüche, **dadurch gekennzeichnet, daß** es sich bei den Wiederholungseinheiten (R1) um

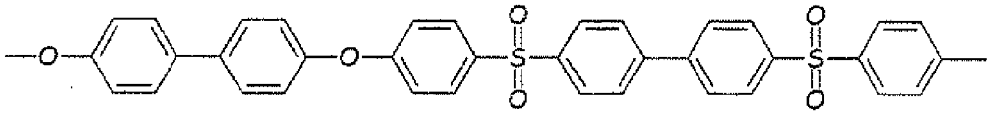

handelt.

9. Folie nach einem der vorhergehenden Ansprüche, **dadurch gekennzeichnet, daß** es sich bei dem Poly(biphenylethersulfon) (P1) um ein Homopolymer von Wiederholungseinheiten (R1) handelt.

10. Folie nach einem der vorhergehenden Ansprüche, **dadurch gekennzeichnet, daß** das Poly(arylethersulfon) (P2) unter Polysulfonen, Polyethersulfonen und Polyetherethersulfonen ausgewählt ist.

11. Folie nach einem der vorhergehenden Ansprüche, **dadurch gekennzeichnet, daß** das Gewicht des Poly(arylethersulfons) (P2), bezogen auf das Gesamtgewicht des Poly(arylethersulfon)-Materials (P), im Bereich von 40 bis 60 % liegt.

12. Folie nach einem der vorhergehenden Ansprüche, **dadurch gekennzeichnet, daß** das Poly(arylethersulfon)-Material (P) aus Poly(biphenylethersulfon) (P1) besteht.

13. Folie nach einem der vorhergehenden Ansprüche, **dadurch gekennzeichnet, daß** sich alle Wiederholungseinheiten des Fluorkohlenstoffpolymers von mindestens einem fluorierten Monomer ableiten.

14. Folie nach Anspruch 13, **dadurch gekennzeichnet, daß** es sich bei dem fluorierten Monomer um Tetrafluorethylen oder eine Mischung von Tetrafluorethylen mit mindestens einem perfluorierten Monomer handelt.

15. Folie nach Anspruch 14, **dadurch gekennzeichnet, daß** es sich bei dem Fluorkohlenstoffpolymer um ein Homopolymer von Tetrafluorethylen handelt.

16. Folie nach Anspruch 15, **dadurch gekennzeichnet, daß** es sich bei dem Fluorkohlenstoffpolymer um ein nicht fibrillierendes Homopolymer von Tetrafluorethylen handelt.

17. Folie nach einem der vorhergehenden Ansprüche, **dadurch gekennzeichnet, daß** das Gewicht des Fluorkohlenstoffpolymers, bezogen auf das Gewicht des Poly(arylethersulfon)-Materials (P), mindestens 1,0 % beträgt.

18. Folie nach einem der vorhergehenden Ansprüche, **dadurch gekennzeichnet, daß** das Gewicht des Fluorkohlenstoffpolymers, bezogen auf das Gewicht des Poly(arylethersulfon)-Materials (P), unter 18 % liegt.

19. Folie nach einem der vorhergehenden Ansprüche, **dadurch gekennzeichnet, daß** die Polymerzusammensetzung (C) gegebenenfalls ferner wasserfreies Zinkborat umfaßt und das Gewichtsverhältnis ($q_1$) von wasserfreiem Zinkborat zu Fluorkohlenstoffpolymer so beschaffen ist, daß :

$$0 \leq q_1 \leq 50\ \%.$$

**20.** Folie nach Anspruch 19, **dadurch gekennzeichnet, daß** die Polymerzusammensetzung (C) frei von wasserfreiem Zinkborat ist.

**21.** Folie nach einem der vorhergehenden Ansprüche, **dadurch gekennzeichnet, daß** die Polymerzusammensetzung (C) gegebenenfalls ferner Titandioxid umfaßt und das Gewichtsverhältnis ($q_2$) von Titandioxid zu Fluorkohlenstoffpolymer so beschaffen ist, daß :

$$0 \leq q_2 \leq 150\ \%.$$

**22.** Folie nach Anspruch 21, **dadurch gekennzeichnet, daß** das Gewichtsverhältnis ($q_2$) von Titandioxid zu Fluorkohlenstoffpolymer so beschaffen ist, daß :

$$50 < q_2 < 100\ \%.$$

**23.** Folie nach Anspruch 21, die frei von Titandioxid ist.

**24.** Verfahren zur Herstellung der Folie nach einem der vorhergehenden Ansprüche, bei dem man die Polymerzusammensetzung (C) extrudiert.

**25.** Formkörper, umfassend die Folie nach einem der Ansprüche 1 bis 23 bzw. die nach dem Verfahren nach Anspruch 24 hergestellte Folie.

**26.** Formkörper nach Anspruch 25, umfassend :

- einen Einsackteil, der aus dem Film besteht, und
- ein Material (Z), wobei das Material (Z) durch den Einsackteil umhüllt ist.

**27.** Formkörper nach Anspruch 26, **dadurch gekennzeichnet, daß** es sich bei dem Material (Z) um Glasfaser handelt.

## Revendications

**1.** Film ayant une épaisseur inférieure à 100 μm, contenant une composition polymère (C) contenant :

- un matériau poly(aryléthersulfone) (P), constitué de

■ au moins un poly(biphényléthersulfone) (P1) dont un pourcentage molaire supérieur à 50 % des unités structurales sont des unités structurales (R1) contenant au moins un groupe éther (-O-), au moins un groupe sulfone ($-SO_2-$) et au moins un groupe p-biphénylène :

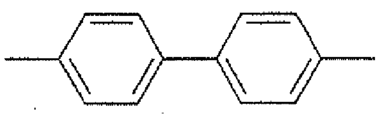,

ou

■ au moins un poly(biphényléthersulfone) (P1) et au moins un poly(aryléthersulfone) (P2) différent du poly(biphényléthersulfone) (P1), et

- au moins un polymère fluorocarboné.

2. Film selon la revendication 1, **caractérisé en ce que** l'épaisseur est inférieure à 20 μm.

3. Film selon la revendication 1 ou 2, **caractérisé en ce que** l'épaisseur est supérieure à 2 μm.

4. Film selon la revendication 2 ou 3, **caractérisé en ce que** l'épaisseur est de 4 à 8 μm.

5. Film selon la revendication 2 ou 3, **caractérisé en ce que** l'épaisseur est supérieure à 8 et jusqu'à 16 μm.

6. Film selon l'une quelconque des revendications précédentes, **caractérisé en ce qu'**il consiste en une composition polymère (C) et un matériau poly(aryléthersulfone) (P) est contenu dans la composition polymère (C) dans une quantité supérieure à 85 % en poids.

7. Film selon l'une quelconque des revendications précédentes, **caractérisé en ce que** les unités structurales (R1) sont :

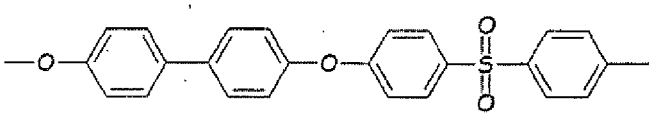

8. Film selon l'une quelconque des revendications précédentes, **caractérisé en ce que** les unités structurales (R1) sont :

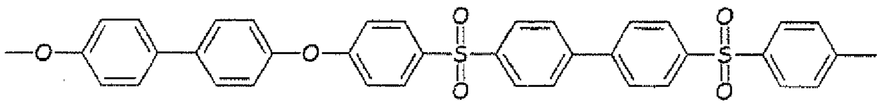

9. Film selon l'une quelconque des revendications précédentes, **caractérisé en ce que** le poly(biphényléthersulfone) (P1) est un homopolymère d'unités structurales (R1).

10. Film selon l'une quelconque des revendications précédentes, **caractérisé en ce** le poly(aryléthersulfone) (P2) est choisi parmi des polysulfones, des polyéthersulfones et des polyétheréthersulfones.

11. Film selon l'une quelconque des revendications précédentes, **caractérisé en ce que** le poids du poly(aryléthersulfone) (P2), relativement au poids total du matériau poly(aryléthersulfone) (P), est de 40 à 60 %.

12. Film selon l'une quelconque des revendications précédentes, **caractérisé en ce que** le matériau poly(aryléthersulfone) (P) se compose de poly(biphényléthersulfone) (P1).

13. Film selon l'une quelconque des revendications précédentes, **caractérisé en ce que** toutes les unités structurales du polymère fluorocarboné sont dérivées d'au moins un monomère fluoré.

14. Film selon la revendication 13, **caractérisé en ce que** le monomère fluoré est le tétrafluoroéthylène ou un mélange de tétrafluoroéthylène avec au moins un monomère perfluoré.

15. Film selon la revendication 14, **caractérisé en ce que** le polymère fluorocarboné est un homopolymère de tétrafluoroéthylène.

16. Film selon la revendication 15, **caractérisé en ce que** le polymère fluorocarboné est un homopolymère sans fibrillation de tétrafluoroéthylène.

**17.** Film selon l'une quelconque des revendications précédentes, **caractérisé en ce que** le poids du polymère fluorocarboné, relativement au poids du matériau poly(aryléthersulfone) (P), est d'au moins 1,0 %.

**18.** Film selon l'une quelconque des revendications précédentes, **caractérisé en ce que** le poids du polymère fluorocarboné, relativement au poids du matériau poly(aryléthersulfone) (P), est inférieur à 18 %.

**19.** Film selon l'une quelconque des revendications précédentes, **caractérisé en ce que** la composition polymère (C) peut éventuellement comprendre en outre du borate de zinc anhydre et le rapport pondéral ($q_1$) du borate de zinc anhydre contre le polymère fluorocarboné est tel que :

$$0 \leq q_1 \leq 50\ \%.$$

**20.** Film selon la revendication 19, **caractérisé en ce que** la composition polymère (C) ne contient pas de borate de zinc anhydre.

**21.** Film selon l'une quelconque des revendications précédentes, **caractérisé en ce que** la composition polymère (C) peut éventuellement comprendre en outre du dioxyde de titane et le rapport pondéral ($q_2$) du dioxyde de titane contre le polymère fluorocarboné est tel que :

$$0 \leq q_2 \leq 150\ \%.$$

**22.** Film selon la revendication 21, **caractérisé en ce que** le rapport pondéral ($q_2$) du dioxyde de titane contre le polymère fluorocarboné est tel que :

$$50 < q_2 < 100\ \%.$$

**23.** Film selon la revendication 21, lequel ne contient pas de dioxyde de titane.

**24.** Procédé de fabrication du film l'une quelconque des revendications précédentes, lequel comprend l'étape d'extrusion de la composition polymère (C).

**25.** Article mis en forme comprenant le film selon l'une quelconque des revendications 1 à 23 ou préparé par le procédé selon la revendication 24.

**26.** Article mis en forme selon la revendication 25, lequel comprend :

- une partie d'ensachage constituée du film, et
- un matériau (Z), ledit matériau (Z) étant enveloppé par la partie d'ensachage.

**27.** Article mis en forme selon la revendication 26, **caractérisé en ce que** le matériau (Z) est de la fibre de verre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 65313705 P
- US 2002010307 A1
- US 6329493 B1
- US 6228970 B1
- US 5916958 A
- US 5110934 A
- WO 9115539 A
- US 5164466 A
- EP 0450790 A
- US 5173542 A
- EP 0331492 A
- US 4997902 A
- WO 8604906 A
- US 4380618 A
- US 5223343 A
- US 5204400 A
- US 5916058 A